# EUROPEAN PATENT SPECIFICATION

(11) **EP 1 019 640 B1**
(45) Date of publication and mention of the grant of the patent: **25.05.2005**
(21) Application number: 98951974.9
(22) Date of filing: 28.09.1998
(51) Int. Cl.: F16B 21/00, F16B 13/08, F16B 13/04

(54) **CANTILEVER FASTENER ASSEMBLY**
AUSKRAGENDE BEFESTIGUNGSVORRICHTUNG
ENSEMBLE DE FIXATION EN PORTE-A-FAUX

(30) Priority: 29.09.1997 US 939450
(43) Date of publication of application: 19.07.2000
(73) Proprietor: Pinnacle Innovations Inc., East Brunswick, NJ 08816 (US)
(72) Inventor: SISTO, Salvatore, J., East Brunswick, NJ 08816 (US); RUDNICKI, Edward, Colts Neck, NJ 07728 (US)
(74) Representative: Neugebauer, Jürgen, Dipl.Phys.
(86) International application number: PCT/US1998/020318
(87) International publication number: WO 1999/017031

(56) References cited:
- DE-A- 2 917 468
- GB-A- 1 536 674
- US-A- 1 962 289
- US-A- 2 024 871
- US-A- 2 059 153
- US-A- 2 771 259
- US-A- 4 086 840
- US-A- 4 116 104
- US-A- 5 163 796
- US-A- 5 209 621
- US-A- 5 425 609

## Description

The present invention relates generally to fasteners and, more particularly, to a blind fastener that can be readily adapted to interconnect a wide variety of objects and structural elements according to the first part of claim 1 (DE 29 17 468 A).

### Description of the Background Art

Over the years, a vast array of fasteners have been proposed, with each being cited as having one or more advantages that make it suitable for a given application or installation. In situations where the user lacks convenient access to one side of the structural components to be joined, however, the options are somewhat limited. Fasteners installed in structural members such as hollow walls, for example, typically comprise a threaded member, such as a bolt or screw, and an anchoring mechanism. Rotation of the threaded member causes the anchoring mechanism to expand and contact the inside of the wall to anchor the fastener in place. Common examples of such fasteners are the so-called "toggle" bolts and "moly" bolts.

One problem associated with blind fasteners of the aforementioned type is that a portion of the anchoring mechanism is usually received within the hole in the wall through which the fastener is inserted. Therefore, stress exerted by heavy objects attached to the fastener on the outside of the wall may cause the fastener to pull outwardly through the opening. Another problem is that the fasteners must be carefully installed to ensure that they are not over-torqued. Continued twisting of the threaded bolt or screw after the anchoring mechanism has contacted the inner surface of the wall will cause the anchoring mechanism to twist and dig into the inner surface of the wall. This digging action gouges the periphery of the wall hole, which causes the fastener to fit loosely within the wall and thereby increases the likelihood that the fastener will become dislodged from the wall.

Additionally, the supporting capacity/strength of conventional fastening structures is limited by a relatively short axis of rotation in the axial plane. As will be readily appreciated by those skilled in the art, this axis is defined by the distance between the points of support provided by the anchoring assembly and threaded member. In the case of prior art configurations such, for example, as the "moly" bolt, this distance is equivalent to the thickness of the wall or wallboard and is typically far too short to support large or heavy objects due to the high concentration of stresses over such a small area. Commercially available blind fasteners of this type will generally support a nominal vertical weight of about twenty pounds mounted flush to ½ inch thick drywall, however, if mounted 1"- 2" off the drywall the load capabilities will drop significantly, typically below 10% of the nominal load.

Another type of blind fastener, the rivet, is most often used where two or more overlapping planar elements are to be joined. For example, in the construction of modem aircraft, rivets are typically used to join the individual sheets of aluminum that collectively form a skin over the air frame. In such an environment, it is usually permissible for the adjacent rivets to be separated by the preferred spacing of one rivet diameter. Rivets have also be employed in the construction of more advanced aircraft that require the joining of complex control surfaces of graphite or other composite materials. Due to stress concentrations adjacent the holes in such materials, however, the inter-rivet spacing must be increased to four rivet diameters -- thereby limiting the joining forces that may be applied. Extremely close tolerances must also be observed in order to ensure a reliable attachment.

### SUMMARY OF THE INVENTION

The deficiencies associated with the prior art are avoided by a fastener assembly according to claim 1 in which joining forces are imparted at two or more, and preferably three or more radially distributed regions that are located away from the peripheral edges of aligned openings in respective elements to be fastened. In this manner, stress concentrations at the periphery of the aligned openings are substantially avoided. It is contemplated that fasteners constructed in accordance with the teachings of the present invention may be employed in connection with the support of relatively heavy objects on such diverse structural assemblies as hollow and solid core walls, metal frame members, channels and panel members, concrete and cinder block structures, as well as other structures which will become apparent to the artisan of ordinary skill. It is further contemplated that fasteners constructed in accordance with the present invention may be utilized as an alternative to the rivet as a means to secure overlapping sheets or panels of material.

A fastener constructed in accordance with an illustrative embodiment of the present invention includes a face plate having a central aperture alignable with an opening defined by respective elements to be joined, an anchoring assembly dimensioned for insertion into and through the opening and comprising a base portion and a support structure extending therefrom, and a positioner for axially moving the support structure of the anchoring assembly relative to the face plate.

The face plate has a front surface and a rear surface, the rear surface being positionable on a surface of either (1) a first structural element -- wherein a second structural element may be attached to the face plate via one or more conventional fastening techniques such, for example, as the use of threaded screws, stud welded members, and the like or (2) a second structural element -- wherein the first and second structural element have aligned through openings and are held together in a laminar or overlapping relationship between the apertured face plate and the anchoring assembly.

The support structure is manipulable between a folded position facilitating insertion through the opening in the apertured structural element(s) and a diverging or spread position. Once the anchoring assembly has been inserted through an aperture in the structural member(s), the support structure projects from the base portion in an axial direction toward the interior surface of the first structural element, thereby preventing its removal.

The positioner is dimensioned and arranged to extend, upon insertion of the anchoring assembly through the opening in the first structural element, from the base portion in a direction axially aligned with the face plate aperture. A pulling force may thereby be exerted on the anchoring assembly via the positioner such that the anchoring assembly is moved into a final position in which the support structure engages surface regions of the first structural element opposed to the surface upon which the face plate is positioned.

The support structure of the anchoring assembly is dimensioned and arranged to impart, when in the diverging position and upon complete actuation of the positioner, joining forces on an interior surface of the first structural element at two or more radially equidistant regions isolated from the peripheral edge of the opening without imparting forces on the interior surface of the second structural element at any point between an edge of the opening and the radially equidistant regions. The support structure of the anchoring assembly is sufficiently rigid as to resist continued movement of the base portion toward the face plate when distal regions of the support structure initially contact the first structural element -despite continued exertion of pulling forced on the anchoring assembly by the positioner. Joining forces are exerted by these same distal regions, and the support structure is sufficiently rigid as to prevent displacement of the distal regions from their initial positions of contact with the first structural element despite continued exertion of pulling forces on the anchoring assembly by the positioner.

The various features of novelty which characterize the invention are pointed out with particularity in the claims annexed to and forming part of the disclosure. For a better understanding of the invention, its operating advantages, and specific objects obtained by its use, reference should be had to the accompanying drawings and descriptive matter in which there are illustrated and described several embodiments of the invention.

### BRIEF DESCRIPTION OF THE DRAWINGS

The various objects and advantages of the invention will be apparent from the detailed description and claims when read in conjunction with the accompanying drawings wherein:
FIG. 1 is an exploded side view of a fastener assembly constructed in accordance with an illustrative embodiment of the present invention;
FIG. 2 is a side elevation view depicting the fastener of FIG. 1 with the anchoring assembly in a folded position to allow installation through a suitably dimensioned hole in a panel or other structural member;
FIG. 3 is a side elevation view depicting the fastener of FIG. 1 during installation, the anchoring assembly assuming the diverging or spread position shown after an axial force is applied via the positioning element;
FIG. 4 is a side elevation view depicting the fastener of FIG. 1 as installed;
FIG. 5 is a front elevation view showing the external appearance of the fastener of FIGS. 1-4 as installed, with radially distributed and equidistant regions of contact of the wing member tip portions with the interior surface of the panel shown in dotted line form;
FIG. 6 is an exploded perspective view of an alternate embodiment of the present invention, with the construction of the face plate being shown in partial cross section;
FIG. 7A is a perspective view of a modified anchoring assembly constructed in accordance with the present invention;
FIG. 7B is a perspective view of another modified anchoring assembly constructed in accordance with the present invention;
FIG. 8 is an exploded perspective view of a further embodiment of the present invention employing an apertured tubular body extending from the face plate and a mechanically spread anchoring assembly configuration;
FIG.9 is a cross sectional view depicting the interior construction of the tubular body structure employed in the embodiment of FIG. 8;
FIG. 10 is a front elevation view showing the external appearance of the tubular body member of FIG. 9 as installed in a structural panel;
FIG. 11 is a side elevation view depicting the embodiment of FIG. 8 as the finally installed;
FIG. 12 is an exploded perspective view of a fastener assembly constructed in accordance with yet another embodiment of the present invention;
FIG. 13 is a plan view of the fastener assembly of FIG. 12 installed with a metal stud of the type commonly found in the construction of commercial office buildings and other structures; and
FIG. 14 is an exploded perspective view of a generic blind fastener advantageously utilizing a flexible tubular member in conjunction with the positioning element in accordance with the teachings of the present invention.

### DETAILED DESCRIPTION OF THE INVENTION

In the description which follows, like parts are marked throughout the specification and drawings, respectively. The drawings are not necessarily to scale and in some instances proportions have been exaggerated in order to more clearly depict certain features of the invention. For ease of understanding, the fastening assembly of the present invention will be described within the context of a specific application, that of securing a grab bar to a plasterboard wall. It will be readily appreciated by those skilled in the art, however, that the invention herein is equally applicable to many other fastening tasks including, for example, the securing of a railing or seat to a fiberglass panel structure as may be found on marine craft, securing a bathroom partition or other bathroom accessory to a gypsum board ("drywall") panel, securing to channels, composite structures, circuit boards and the like.

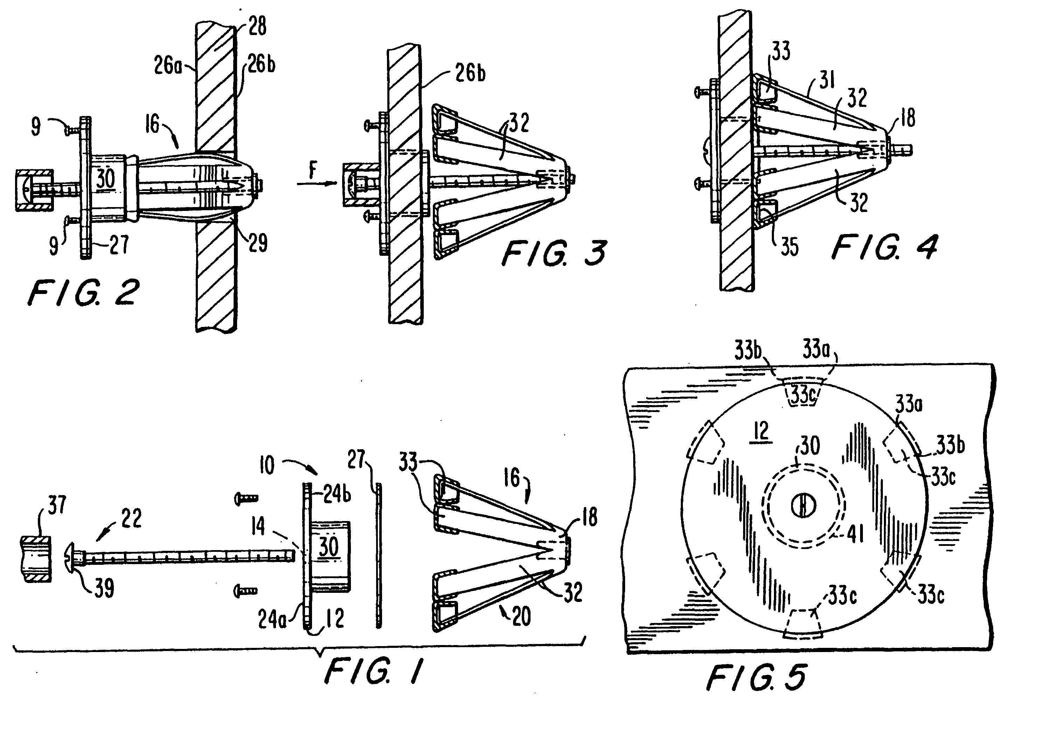

A fastener constructed in accordance with an illustrative embodiment of the present invention especially useful for installation into such structures as, for example, panels of gypsum board (commonly referred to as "drywall" or "sheet rock"), fiberglass, or the like is depicted in FIGS. 1-5. With initial reference to FIG. 1, it will be seen that fastener assembly 10 includes a thin face plate 12 having a central aperture 14, an anchoring assembly 16 dimensioned for insertion into and through a structural opening and comprising a base portion 18 and a support structure 20 integrally formed on and extending therefrom, and a positioner 22 for axially moving the support structure 20 of the anchoring assembly 16 relative to the face plate 12.

Face plate 12 has a front surface 24a and a rear surface 24b, the rear surface being positionable on a surface of either (1) a first structural element -- wherein a second structural element may be attached to the face plate via one or more conventional fastening techniques such, for example, as the use of threaded screws, stud welded members, and the like or (2) a second structural element -- wherein the first and second structural element have aligned through openings and are held together in a laminar or overlapping relationship between the apertured face plate and the anchoring assembly. In the illustrative installation depicted in FIGS. 2-5, the fastener assembly 10 is shown as being employed in the former application, with rear surface 24b overlying exterior surface 26a of a single panel member 28 and with central aperture 14 being aligned with a hole 29 previously formed, as by drilling or other operation, to accommodate insertion of anchoring assembly 16. As an aid to installation, an annular gasket 27 having an adhesive applied to each face may be interposed between surfaces 24b and 26a.

Returning briefly to FIG. 1, it will be seen that an optional tubular spacer element 30 extending from rear surface 24b of face plate 12 may be employed to prevent shifting of the faceplate relative to the hole and to thereby ensure precise alignment of the anchoring assembly 16 during installation and while under load, and resolidifying the aperture 29, increasing structural properties . For this purpose, the cross sectional profile and exterior dimensions of spacer element 30 may be selected so that they closely correspond to that of preformed hole 29.

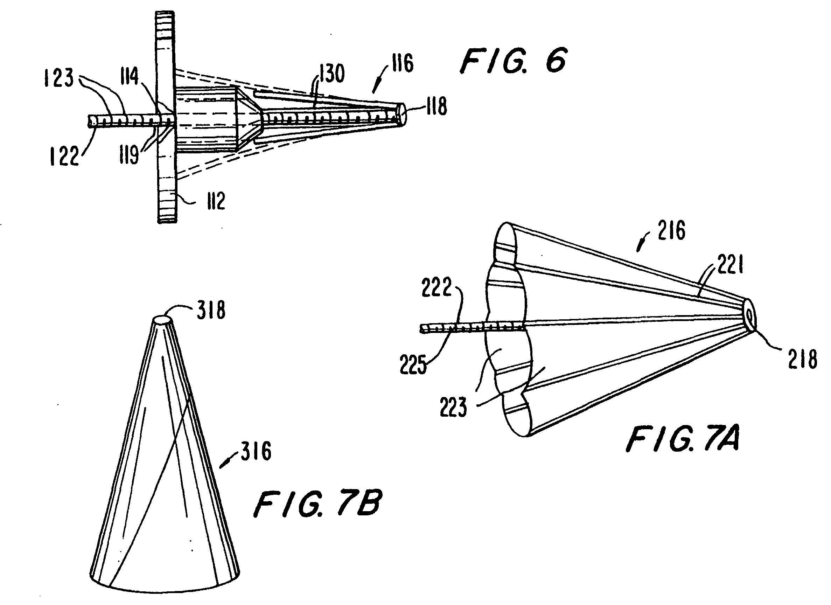

The face plate 12 is maintained in the finally installed position shown in FIGS. 4 and 5 by anchoring assembly 16, which will now be described in detail. In accordance with the teachings of the present invention, support structure 20 of anchoring assembly 16 is manipulable between the folded position shown in FIG. 2 facilitating insertion through an opening in the apertured structural element(s), as hole 29 in single panel member 28, and the diverging or spread position of FIG. 3. Once the anchoring assembly 16 has been inserted through an aperture in one or more structural member(s), the support structure 20 projects from the base portion 18 in an axial direction toward the interior surface of a first structural element as, for example, toward interior surface 26b of single panel 28, to thereby prevent its removal.

Although a wide variety of anchoring assembly configurations may be employed in the practice of the present invention, only a few representative examples of these will be discussed in detail herein. In the illustrative embodiment of FIGS. 1-5, the support structure 20 of anchoring assembly 16 comprises a plurality of elongated wing members 32 that extend from base portion 18 in a direction toward the rear or interior surface 24b of face plate 12. Although two wing members may be employed, at least three that are radially arranged relative to the insertion opening are preferred in order to distribute the application of clamping forces over as wide an area as possible. In accordance with this embodiment, the wing members 32 are outwardly biased so that in the absence of any externally applied restraining forces, they expand outwardly from the folded position once the respective distal tips 33 thereof clear the interior surface of the first structural element as surfaces 26b of single panel 28. To permit insertion of the anchoring assembly 16 into the one or more of the structural elements to be joined, the wing members 32 are bendable inwardly. In that regard, and as best seen in FIG. 2, the anchoring assembly 16 may be manipulated prior to insertion such that the wing member tips 33 are confined within spacer element 30. When an axial force F is applied to the positioner 22 in the direction of the arrow shown in FIG. 3, the wing member tips 33 are forced out of engagement with the spacer and the wing members assume the diverging position.

Depending upon such design considerations as the amount of clamping force to be applied with the fastener, the amount of weight to be supported, the operating environment, and the material system of the structure(s) in which the fastener will be installed, the anchoring assembly 16 may of the embodiment of FIGS. 1-5 may be constructed from a wide variety of materials. It is contemplated that a variety of materials such, for example, as polyethylene, glass reinforced nylon, graphite composites may also be employed. In the illustrative embodiment of FIGS. 1-5, the base portion 18 and supporting structure 20 was stamped as a unitary structure from a .030 inch thick sheet of half-hardened stainless steel, and thereafter bent to form the configuration of radially diverging wing members shown in FIG. 1. Because wing members of such thickness might have a tendency to puncture or tear the interior surfaces of certain structural panels as, for example, drywall, during or subsequent to installation, and because it is believed by the inventors herein that greater clamping forces can be exerted, the surface areas of contact (shown in dotted line form in FIG. 5) by the wing member tips 33 are preferably maximized to the greatest extent permitted by the dimensions of the installation opening as opening 29 in FIG. 2.

Accordingly, and with particular reference to FIGS. 4 and 5, it will be seen that each respective wing member 32 has a first cross sectional profile at least an intermediate location 31 between base portion 18 and wing member tips 33. Moreover, each tip 33 has a second cross sectional profile defining a cross sectional area substantially greater than that of the first cross sectional profile. Advantageously, this configuration conserves material and maximizes manipulability of the anchoring assembly as a whole, but also enables maximizes the contact area of the wing member tips 33 themselves so that clamping forces are applied to the panel over as wide an area as possible. In that regard, it should be understood that the dimensions and shape of the wing member tips are constrained only by the need for them to fit within spacer element 30 or, where the spacer element is omitted, by the dimension of the actual panel or structural opening. In the illustrative embodiment depicted in FIGS. 1-5, each tip 33 has a second cross sectional profile characterized by first and second inwardly converging side walls 33a, 33b such that side wall surfaces of adjacent wing member tip portions are pressed into engagement with each other while, for example, retained within spacer element 30 in the manner shown in FIG. 2. In the illustrative embodiment of FIGS. 1-5, the tips 33 were formed by bending a wedge or trapezoidally shaped region 35 at the end of each wing member 32 to form an angle therewith such that each such region 35 is substantially parallel to interior surface 26b when the anchoring assembly 16 is in the diverging position.

Where the anchoring assembly is to be used in panel members or structures constructed of soft or brittle materials such, for example, as drywall panels, or those having smooth surfaces such, for example, as fiberglass, plastics, or composite materials, the tips 33 may optionally be formed or, as in the embodiment of FIGS. 1-5, coated, with a material having different properties than the material comprising the intermediate portion of the wing members. By way of illustration, while the base and intermediate wing portions of the anchoring assembly of FIGS. 1-5 may be fabricated from a material selected for its high compressive and tensile strength such, for example, as the half-hardened stainless steel discussed above, the tip portions 33 themselves may be formed from or coated with a softer material having a higher coefficient of friction such, for example, as a molded plastic material. In half-hardened stainless steel embodiments of the inventive fastener assembly similar to that depicted in FIGS. 1-5 and configured especially for the installation of grab bars into drywall, the bent tip regions 35 of wing members 32 were coated with a plastisol material commercially available from Chemionics Inc. of Talmadge, Ohio and having a durometer hardness of 80 have functioned to avoid puncture or cut-through of interior drywall surfaces despite the application of up to 800 pounds to an attached grab bar. Of course, it will be readily appreciated by those skilled in the art that where it is desired to omit a step of bending the tip regions 35, the wing member tips 33 may be formed by a molding operation directly onto the distal end of each wing member 32.

Returning briefly to FIG. 1, it will be seen that illustrative fastener 10 further includes a positioning element 22 that is dimensioned and arranged to extend, upon insertion of the anchoring assembly 16 through an opening into a first structural element, from the base portion 18 in a direction axially aligned with the face plate aperture. In the illustrative embodiment of FIGS. 1-4, positioning element 22 comprises a threaded member and the base portion 18 of anchoring assembly 16 defines a central aperture correspondingly threaded to receive the threaded positioning element 22. As will be readily appreciated by those skilled in the art, as threaded positioning element 22 is rotated, the anchoring assembly 16 is drawn closer to face plate 12 until respective distal tip regions 32a of anchoring assembly 16 contact corresponding interior surface regions 26b of the first structural element 28. Spinning of the anchoring assembly 16 during installation may, for example, be prevented by applying a pulling force to the positioning element 22 as it is rotated. In accordance with an especially preferred embodiment of the present invention, such a pulling force is facilitated by the inclusion of a short section of flexible tubing 37 having a bore of sufficient diameter to receive and form a friction fit with the head 39 of threaded positioning element 22, and a length sufficiently short to allow a driving tool such, for example, as a screw driver or Allen wrench (not shown), to engage and turn positioning element 22. Advantageously, tightening of the positioning element eventually causes tubing section 35 to fall away, whereupon this part may be disposed of. By way of illustration, flexible tubing 37 may be fabricated from a resilient, elastomeric material such, for example, as rubber.

Advantageously, and as best seen in FIG. 5, the regions of contact between the distal tip regions 32a of the support structure 20 are radially equidistant, that is, symmetrically arranged relative to the center of the opening, so that joining forces are exerted at evenly distributed locations remote from the edge 41 of the opening. The support structure 20 of the anchoring assembly 16 is thus dimensioned and arranged to impart, when in the diverging position and upon complete actuation of the positioning element 22 (FIG. 3), joining forces on the interior surface of the first structural element 26 at three or more radially equidistant regions isolated from the peripheral edge 41 of the opening 29, without imparting forces on the interior surface of the first element at any point between an edge of the opening and the radially equidistant regions. In this manner, stress concentrations at the edges of the aligned openings are avoided and more relaxed tolerances are made possible.

According to the present invention, the support structure 20 of the anchoring assembly 16 is sufficiently rigid as to resist continued movement of the base portion 18 toward the face plate 12 when distal regions, as regions 32a of the support structure 20, initially contact the first structural element, despite continued actuation of the positioning element 22. Joining forces are exerted by these same distal regions of the support structure, with the support structure also being sufficiently rigid as to prevent displacement of the distal regions from their initial positions of contact with the first structural element despite continued actuation of the positioning element 22. Thus, although continued actuation of the positioning element may produce a small amount of bending in wing members 32 after the position in FIG. 2 is reached, the tip portions 32a do not move from their initial points of contact. It will therefore be readily appreciated by those skilled in the art that the flattening of the anchoring member that is characteristic of conventional fasteners, and which disadvantageously results in a concentration of forces in the area immediately adjacent to the hole, does not occur in the anchoring assembly of the present invention.

In the absence of a strong second structural member interposed between face plate 12 and wings 32 of anchoring assembly 16, the outside diameter (or minimum dimension) of face plate 12 is preferably (although not necessarily) selected so that the biased wing members 32 of anchoring assembly 16 do not extend substantially beyond the peripheral edge(s) thereof. This arrangement advantageously distributes stresses only over those portions of the surrounding wall which are in compression -- providing substantially enhanced mechanical strength and stability. Where the fastener of the present invention is employed to secure a large, rigid, second structural member to the first structural member, the wings may extend beyond face plate 12. Indeed, the structurally rigid second member may itself be considered an extension of the face plate in that the two components together may serve to distribute forces over a much greater area than face plate 12 alone. Thus, for example, the fastener of the present invention may be employed to secure a kitchen cabinet or similar shelving structure to a gypsum wall board.

With reference now to FIGS. 6-15, it will be seen that various modifications and alternate configurations of the fastener assembly of the present invention are possible. In the embodiment of FIG. 5, for example, the positioning element 122 extends from the center of the base portion 118 of anchoring assembly 116 and is attached, coupled or integrally formed therewith. The positioning element 122 is configured in the manner of a wire tie and comprises a an elongated member with a series of spaced serrations 123. Faceplate 112 is similar in construction to face plate 12 of FIGS. 1-5, but is modified to include a series of serrations 119 within central aperture 114. The anchoring assembly 116 is inserted into the wall and positioning element is merely pulled through the central aperture 114 of faceplate 112, spreading the wing members 130 until the final position (shown in partial dotted line form in FIG. 5) is reached.

FIGS. 7a and 7b depict modified configurations of the anchoring assembly. Referring first to FIG. 7a, there is shown an anchoring assembly 216 which resembles a badminton "birdie", consisting of a conical framework of diverging members 221 interconnected by lateral stiffeners 223. The embodiment of FIG. 7a is contemplated as being feasible for implementation using a resilient material such, for example, as glass reinforced nylon or the like. As in the preceding example depicted in FIG. 6, positioning element 222 is configured as an elongated element with serrated teeth 225 engageable with mating structure on an apertured faceplate (not shown). In the embodiment of FIG. 7b, the anchoring assembly 316 is constructed as a deformable cone, with the base portion 318 comprising, for example, a threaded apex region. To facilitate insertion through an opening, the anchoring assembly may be configured as a single sheet of a spirally wound resilient material, as, for example, spring steel, with insertion being achieved by rotation of the positioning element (not shown) in a first direction to provide a tightly wound cone (not shown) and, following insertion, rotation in the opposite direction to unwind the cone and produce the arrangement shown in FIG. 7b.

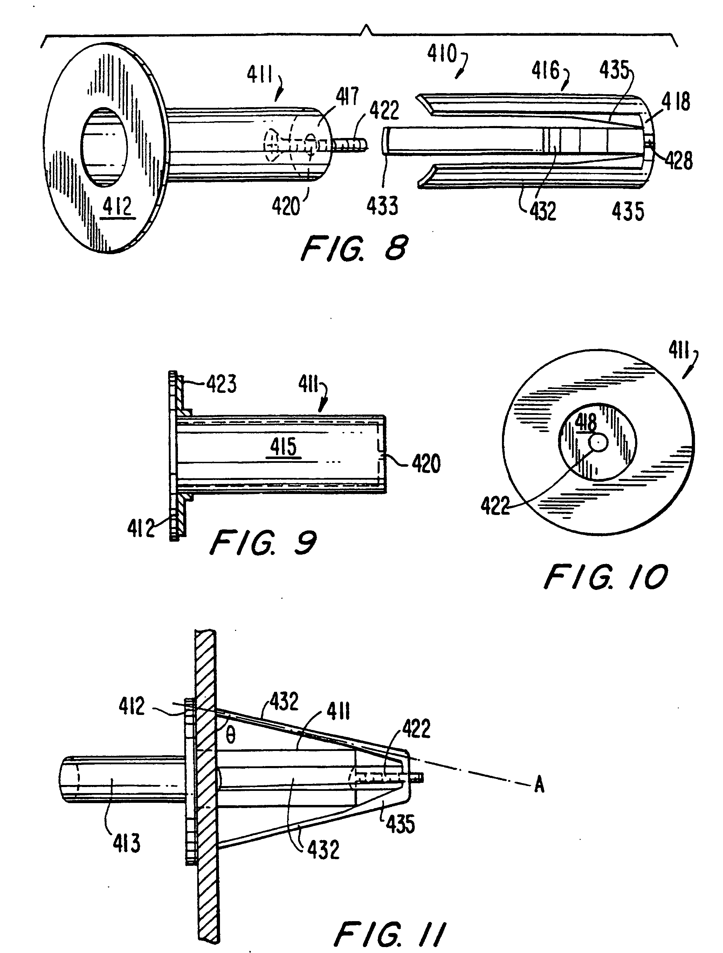

With reference now to FIGS. 8-11, an embodiment of the present invention employing a mechanically spread anchoring assembly and an apertured tubular body extending from the face plate will now be described in detail. As best seen in FIG. 8, fastener assembly 410 includes an elongated tubular body 411 attached at its proximal end to face plate 412. The tubular body 411 defines an axial cavity 415 (FIG. 9) which may, for example, be dimensioned to receive a correspondingly dimensioned support member 413. By way of illustrative example, support member 413 may be used to support such diverse structures as shelving, curtain rods, displays, signage, wire racks, and the like. In that regard, the structure to be supported may be provided with an integrally formed or otherwise attached extension dimensioned and arranged for insertion into cavity 415. Of course, if it is not desired to retain or support a structure in the above described manner, a flush fitting cap or other closure member (not shown) dimensioned and textured to blend with face plate 412 may be employed. Although the tubular body 411 and face plate 412 are shown as having a circular cross sectional profile, it should be noted that such a configuration is for illustrative purposes only. It is, in fact, contemplated that a variety of cross sectional profiles may be utilized, depending upon aesthetic considerations and the individual tastes of the user. Thus, for example, the face plate and/or tubular body may have an oval or semicircular (arched) profile, or a polygonal (e.g., triangular, rectangular, trapezoidal, hexagonal, octagonal, etc.) cross sectional profile.

In any event, and with particular reference to FIGS. 9 and 10, it will be seen that tubular body 411 further includes a distal end wall 417 having a centrally located aperture 420 dimensioned to receive positioning element 422, illustratively, a threaded member insertable into a correspondingly threaded opening 428 (FIG. 8) in the base portion 418 of anchoring assembly 416. As will be readily appreciated by those skilled in the art, as threaded member 422 is rotated, the anchoring assembly 416 is drawn closer to face plate 412 until the edge surfaces 433 of anchoring assembly wings 432 contact the inside surface of the first structural element. As in the embodiment of FIGS. 1-5, a flexible tubular section (not shown) may be employed to exert both a pulling and an turning force to prevent spinning of anchoring assembly 416 during installation. In such case, of course, the flexible tubular member should be of sufficient length to extend beyond the interior of bore 415 during manipulation by the user. If desired, an adhesive layer 423 (FIG. 9) may be applied or otherwise provided on the rear surface of face plate 412 to restrict movement of the tubular body during installation and to enhance the reliability of the structure thereafter.

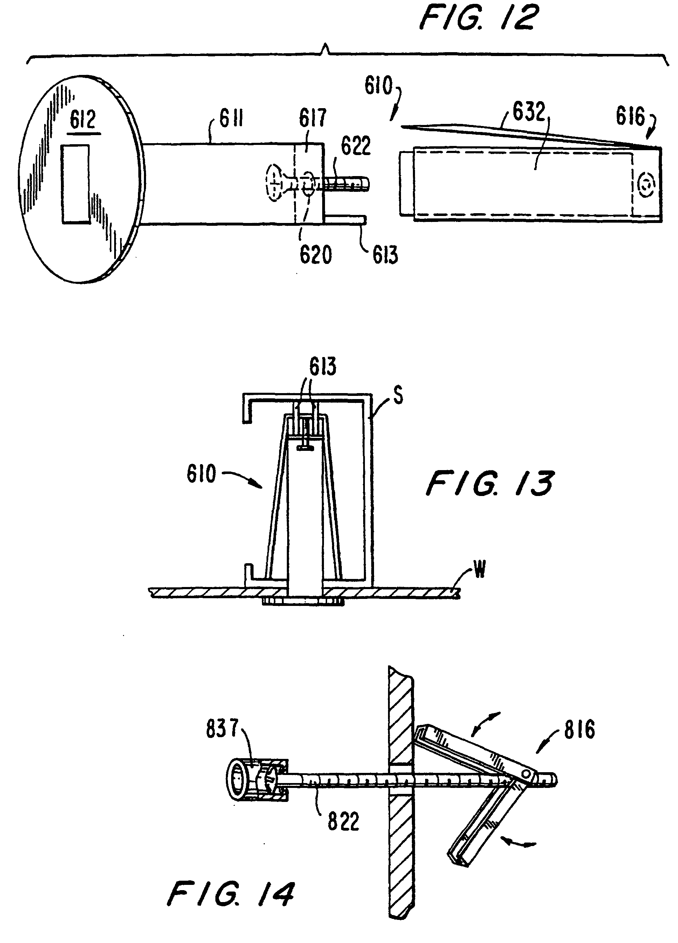

The mechanical spreading of the anchoring assembly employed in the illustrative embodiment of FIGS. 8-11 will be best appreciated by comparing the uninstalled assembly depicted in FIG. 8 to the finally installed assembly of FIG. 11. It should be emphasized and understood that a variety of anchoring assembly configurations, in which the support structure as wing members 432 are spread mechanically from the folded position of FIG. 8 to the diverging position of FIG. 11, are possible and that the embodiment depicted and described herein is to be regarded merely as a representative example of such configurations. In any event, and with particular reference now to FIG. 8, it will be seen that the wing members 432 of anchoring assembly 416 are initially parallel to one another and extend in an axial direction away from the base portion 418 (i.e., toward the rear surface of faceplate 412). This configuration permits the assembled tubular body 411 and anchoring assembly 416 of fastener assembly 410 to be inserted into a suitably dimensioned opening with the base portion 418 entering the opening first.

Once the tips 433 of wing members 432 clear the inside surface of the structure to which it is being secured, axial and rotational forces are exerted via positioning element 422. Each wing member 432 has a tapered thickness region 435 in which the thickness is greatest at a location nearest the base portion 418. As the anchoring assembly is drawn toward the faceplate 412 via positioning element 422, each tapered region 435 contacts a peripheral edge of tubular body end wall 417 and exerts, by a camming action, a force thereon which causes the wing members 432 to spread apart and, ultimately, reach the diverging position shown in FIG. 11. As in the outwardly biased embodiment of FIGS. 1-5, the wing members are preferably constructed of a material that is sufficiently rigid such that wing member tips 433 remain essentially at their respective initial points of contact with the interior surface of the structure into which the fastener assembly 410 is installed, despite continued actuation of the positioning element. Of course, a limited amount of deflection of wing members 432, and even slight movement of the wing member tips 433 from the initial points of contact may be tolerated. However, in order to maximize the application of clamping forces at radially equidistant regions around the structure opening that are isolated from the peripheral edge thereof, the angle θ formed between the longitudinal axis A of each wing member and the interior surface of the structure, once the tips 433 reach their final positions at installation, should be between from 45 to 89 degrees -- with a range of between from 60 to 85 degrees being especially preferred. In cases where the wing members, though sufficiently rigid to restrict movement of the base portion 418 and wing member tips 433 as discussed above, exhibit a significant degree of curvature or "bowing", it is contemplated that a tangent line normal to the wing member surface at its point of maximum deflection should define the angle θ described above, rather than the longitudinal axis.

With reference to FIGS. 12 and 13, there is shown a fastener assembly 610 constructed in accordance with an embodiment of the present invention intended specifically for use in conjunction with rigid structural members such, for example, as steel studs or exterior sheathing panels. As seen in FIG. 12, tubular body 611 is modified such that one or more elongated projections 613 extend from the lower exterior portion of rear end wall 617. By way of illustrative example, these projections may be configured as pins, with either flat or rounded tips, or as teeth configured to bite into the surface of a stud or panel. For a purpose which will soon be explained, the anchoring assembly 616 is also modified in that the wings 632 are distributed to define a gap region to accommodate projections 613. Turning to FIG. 13, it will be seen that when the fastener 610 is inserted through an opening in one flange portion of stud S, projections 613 engage into the other flange portion. This arrangement advantageously exploits the structural strength of the stud while also providing additional cantilever support utilizing the wing structure of the present invention.

In accordance with a further embodiment of the present invention for use in conjunction with rigid structural members, not shown, the anchoring member is omitted altogether. The tubular body is modified such that one or more elongated projections extend from both the upper and lower exterior surface portions of the tubular body rear end wall. Here again, these projections may be configured as pins, with either flat or rounded tips, or as teeth configured to bite into the surface of a stud or panel. To ensure stability in the case of horizontally directed loads, such as those caused by a strong wind upon the surface of a sign, additional elongated projections are preferably included at intermediate exterior portions of the tubular body end wall.

Fastener assemblies constructed in accordance with the present invention can carry a wide variety of attachments and assume a myriad of configurations. For instance, the fastener could be employed as an integral wall anchor to secure a cabinet to a hollow wall or function as a separate fastener in place of screws, nails, or rivets. Similarly, the tubular body employed in the embodiments of FIGS. 8-11 and 12-13 could carry shelving brackets or define attachment means suitable for detachable brackets as commonly used in shelving systems. In this regard, the elongated stem of an object to be supported, or of an underlying support member, may be merely inserted into the axial cavity of the tubular body. To further enhance the reliability of the support arrangement, means may be included to selectively lock the inserted stem within the cavity of the tubular body. In the case of a tubular body having a circular cross sectional profile, for example, the exterior surface of the stem and the interior surface of the tubular body may be threaded for mating engagement -- with the object supporting stem being inserted by rotating the same until it is fully inserted into the tubular body. By way of further example, a flange or mounting collar secured to the object supporting stem may be provided with appropriate apertures and attached to the face plate by threaded screws, an adhesive compound, or other suitable means.

By way of yet another example, the object stem and axial cavity may be configured with inter-engaging serrations to impede axial movement of the installed object step or, alternatively, with a conventional twist-and-lock arrangement using, for example, an interference fit (friction-lock). Thus, in an axial cavity having an ellipsoidal cross-sectional profile, the object supporting stem may be configured with an ellipsoidal cross sectional profile extending at least a portion of its length and having a major axis which is slightly larger than the minor axis of the axial cavity but sufficiently smaller than the major axis of the axial cavity to permit the stem to be inserted when the axes of each are aligned. As will be readily appreciated by those skilled in the art, once the object supporting stem has been successfully introduced into the axial cavity, the formed may be rotated until a friction lock is achieved.

In addition the illustrative embodiments and applications discussed in detail above, it will be readily appreciated by those skilled in the art that there are many other types of structural assemblies with which the inventive fastener may be used. By way of additional example, aluminum frame members are commonly employed in the construction of store front window arrangements to provide the merchant with the largest possible display area for his or her wares. Heretofore, however, the merchant wishing to display relatively heavy goods and other articles in the store window has been required to use large and expensive floor supported displays since there has been no fastener available to take advantage of the supporting properties of the window frame members. It should also be noted that door mounting hardware such, for example, as hinges and self-closing mechanism is typically secured to frame members of the aforementioned type. Repeated use of this hardware inevitably leads to failure due to the concentration of stressed about a relatively small area of attachment.

With reference now to FIG. 14, it will be appreciated by those skilled in the art that the flexible tubular element 37 employed in the embodiment of FIGS. 1-5 has applicability beyond the particular anchoring assembly embodiments discussed above. For example, in situations where the higher clamping forces afforded by the various embodiments described above are not required, it may be desirable to employ other types of blind fasteners such, for example, as those of the toggle bolt or "moly" bolt varieties. An exemplary fastener assembly of the toggle bolt type is indicated generally at 816 in FIG. 14 and includes a spring biased anchoring assembly 816 designed to flatten as threaded positioning element 822 is tightened. As will be readily appreciated by those skilled in the art, when using fasteners of the aforementioned types it is necessary to impart both a pulling or axial force and a rotating or torsional force on the threaded positioning element 822 to prevent turning of the anchoring assemblies within the structure. Using the elastomeric tubular element 837 in accordance with the teachings of the present invention, FIG. 15, such forces may be readily applied in an efficient, low cost manner. When the threaded member is completely tightened and the anchoring assembly has completely flattened, the tubular element is simply removed, with a slight tug if necessary, and discarded.

In view of the foregoing, it is obvious that many changes in and additions to the above described illustrative embodiments may be made without departing from the scope of the invention, and that the invention is not limited to said details except as set forth in the appended claims.

## Claims

1. A fastener assembly (10) for use in joining first and second structural elements to be joined, comprising:
an anchoring assembly (16) insertable through an opening (29) defined in the first structural element, said anchoring assembly having
a base portion (18),
a projecting portion (20) extending in an axial direction from said base portion (18), said projecting portion (20) comprising at least three elongated, outwardly biased wing members (32) being manipulable between a folded position facilitating insertion through the opening (29) in the first structural element (28) and a diverging position preventing withdrawal of the anchoring member through the opening, **characterised in that** it comprises :
a face plate (12) having a front surface (24a) and a rear surface (24b) and defining an aperture (14) alignable with the opening (29) in the first structural element; and
a positioning element (22) for moving the base portion (18) and projecting portion in an axial direction toward the face plate (12), said positioning element extending from said base portion (18) and being axially aligned with the face plate aperture (14),
wherein said projecting portion (20) is dimensioned and arranged to impart, when in said diverging position and upon actuation of said positioning element, joining forces on an interior surface of the first structural element (28) at three or more radially equidistant regions isolated from the periphery of the opening without imparting significant forces on the interior surface of the first structural element at any point between an edge of the opening and said radially equidistant regions,
wherein the projecting portion of the anchoring assembly (16) is sufficiently rigid as to restrict further movement of the base portion (18) toward the face plate (12) when the projecting portion initially contacts the first structural element, despite continued actuation of the positioning element,
wherein the projecting portion is sufficiently rigid as to prevent displacement of distal regions of the anchoring assembly (16) from initial positions of contact with the first structural element despite progressive exertion ofa pulling force on the anchoring assembly (16) by the positioning element.

2. The fastener assembly (10) of claim 1, wherein said wing members (32) are outwardly moveable.

3. The fastener assembly of claim 1 or 2, further including a spacer element (30, 411, 611) secured to said faceplate and insertable into the opening to thereby restrict movement of said face plate (12, 112, 412, 612) relative to the opening.

4. The fastener assembly (10) of claim 3, wherein the projecting portion of said anchoring assembly (16) is outwardly biased into said diverging position and wherein said spacer element (30) is further dimensioned and arranged to retain said projecting portion in the folded position during insertion of the anchoring assembly (16) through the opening.

5. The fastener assembly (10) of claim 1 or 2, wherein each of the wing members (32) extends from said base portion (18) and has a tip portion defining said radially equidistant regions of contact with the first structural member.

6. The fastener assembly (10) of claim 1 or 2, wherein elongated members (221) are interconnected by lateral stiffeners (222), each elongated member extending from said base portion (218) and having a tip portion defining said radially equidistant regions of contact with the first structural member.

7. The fastener assembly (10) of claim 1 or 2, wherein said positioning element is dimensioned and arranged to extend from said base portion (18) and through said opening and said apertured face plate (12).

8. The fastener assembly (10) of claim 7, wherein said base portion (18) defines a threaded, central aperture (14) and wherein said positioning element comprises a threaded member, whereby axial movement of the anchoring assembly (16) relative to the face plate (12) is achieved by rotation of the threaded member.

9. The fastener assembly (10) of claim 7, wherein said positioning element comprises an elongated member (112) defining a plurality of teeth, said fastener assembly (10) further including a retaining structure, aligned with said face plate aperture (14), defining complementary teeth engageable with said elongated member so as to permit movement of the anchoring assembly (16) toward the face plate (12) while preventing movement in the opposite direction.

10. The fastener assembly (10) of claim 7, wherein said positioning element comprises an elongated member defining a plurality of teeth and wherein said face plate (12) defines complementary teeth, aligned with said face plate aperture (14), engageable with said elongated member so as to permit movement of the anchoring assembly (16) toward the face plate (12) while preventing movement in the opposite direction.

11. The fastener assembly (10) of claim 1 or 2, further including a tubular body (411, 611) secured to said face plate (412), said tubular body being dimensioned for insertion into the opening in said first structural element and having an end wall defining an aperture dimensioned to accommodate insertion of said positioning element.

12. The fastener assembly (10) of claim 1 or 2, further including a tubular body (411) secured to said face plate (12), said tubular body having at least one sidewall defining a plurality of slots equal in number to the number of radially equidistant regions of contact defined by the projecting portion.

13. The fastener assembly (10) of claim 1 or 2, further comprising camming means engageable with said projecting portion for causing said projecting portion to spread into said diverging position upon actuation of said positioning element.

14. The fastener assembly (10) of claim 1 or 2, wherein said faceplate (12) defines at least one threaded opening dimensioned and arranged to receive a correspondingly threaded fastener passing through an opening in the second structural element.

## Patentansprüche

1. Befestigungsvorrichtung (10) zur Verwendung beim Verbinden von ersten und zweiten miteinander zu verbindenden strukturellen Elementen, welche umfasst:
eine Verankerungsvorrichtung (16), welche einführbar ist durch eine Öffnung (29), die in dem ersten strukturellen Element ausgebildet ist, wobei die Verankerungsvorrichtung aufweist
einen Basisbereich (18),
einen vorspringenden Bereich (20), der sich in einer axialen Richtung vom Basisbereich (18) erstreckt, wobei der vorspringende Bereich (20) zumindest drei längliche, nach außen gepresste Flügelelemente (32) umfasst, die veränderbar sind zwischen einer gefalteten Stellung, die das Einführen durch die Öffnung (29) im ersten strukturellen Element (28) erleichtert, und einer auseinanderstrebenden Stellung, die ein Zurückziehen des Verankerungselements durch die Öffnung verhindert, **dadurch gekennzeichnet, dass** sie umfasst:
eine Abdeckplatte (12) mit einer Vorderfläche (24a) und einer Endfläche (24b), welche eine Öffnung (14) festlegt, die ausrichtbar ist mit der Öffnung (29) im ersten strukturellen Element; und
ein Positionierungselement (22) zum Bewegen des Basisbereichs (18) und des vorspringenden Bereichs in einer axialen Richtung hin zur Abdeckplatte (12), wobei sich das Positionierungselement von dem Basisbereich (18) erstreckt und axial ausgerichtet wird mit der Öffnung (14) in der Abdeckplatte,
wobei der vorspringende Bereich (20) so dimensioniert und ausgelegt ist, dass er, wenn er sich in der auseinanderstrebenden Stellung befindet und wenn das Positionierungselement betätigt wird, Verbindungskräfte ausübt auf eine Innenfläche des ersten strukturellen Elements (28) an drei oder mehr radial äquidistanten Bereichen, die abgesetzt sind vom Rand der Öffnung, ohne dass wesentliche Kräfte ausgeübt würden auf die Innenfläche des ersten strukturellen Elements an irgendeinem Punkt zwischen einer Kante der Öffnung und den radial äquidistanten Bereichen,
wobei der vorspringende Bereich der Verankerungsvorrichtung (16) ausreichend steif ist, um eine weitere Bewegung des Basisbereichs (18) hin zur Abdeckplatte (12) zu beschränken, wenn der vorspringende Bereich zunächst mit dem ersten strukturellen Element in Kontakt tritt, trotz anhaltender Betätigung des Positionierungselements,
wobei der vorspringende Bereich ausreichend steif ist, um eine Verschiebung von distalen Bereichen der Verankerungsvorrichtung (16) aus ursprünglichen Kontaktpositionen mit dem ersten strukturellen Element zu verhindern trotz einer anwachsenden Einwirkung einer ziehenden Kraft auf die Verankerungsvorrichtung (16) durch das Positionierungselement.

2. Befestigungsvorrichtung (10) nach Anspruch 1, wobei die Flügelelemente (32) nach außen bewegbar sind.

3. Befestigungsvorrichtung nach Anspruch 1 oder 2, welche weiterhin ein Abstandshalteelement (30, 411, 611) umfasst, welches an der Abdeckplatte angebracht ist und einführbar ist in die Öffnung, um hierdurch die Bewegung der Abdeckplatte (12, 112, 412, 612) relativ zur Öffnung einzuschränken.

4. Befestigungsvorrichtung (10) nach Anspruch 3, wobei der vorspringende Bereich der Verankerungsvorrichtung (16) nach außen gepresst wird in die auseinanderstrebende Stellung und wobei das Abstandshalteelement (30) weiterhin so dimensioniert und angeordnet ist, dass der vorspringende Bereich in der zusammengefalteten Stellung gehalten wird während der Einführung der Verankerungsvorrichtung (16) durch die Öffnung.

5. Befestigungsvorrichtung (10) nach Anspruch 1 oder 2, wobei ein jedes der Flügelelemente (32) sich von dem Basisbereich (18) erstreckt und einen als Spitze ausgebildeten Bereich aufweist, welcher die radial äquidistanten Kontaktbereiche mit dem ersten strukturellen Element festlegt.

6. Befestigungsvorrichtung (10) nach Anspruch 1 oder 2, wobei längliche Elemente (221) miteinander verbunden sind durch seitliche Versteifungselemente (222), wobei ein jegliches längliches Element sich von dem Basisbereich (218) erstreckt und einen als Spitze ausgebildeten Bereich aufweist, der die radial äquidistanten Kontaktbereiche mit dem ersten strukturellen Element festlegt.

7. Befestigungsvorrichtung (10) nach Anspruch 1 oder 2, wobei das Positionierungselement so dimensioniert und angeordnet ist, dass es sich von dem Basisbereich (18) und durch die Öffnung und die mit einer Öffnung versehene Abdeckplatte (12) erstreckt.

8. Befestigungsvorrichtung (10) nach Anspruch 7, wobei der Basisbereich (18) eine mit einem Gewinde versehene mittige Öffnung (14) festlegt und wobei das Positionierungselement ein mit einem Gewinde versehenes Element umfasst, wodurch eine axiale Bewegung der Verankerungsvorrichtung (16) relativ zur Abdeckplatte (12) erzielt wird durch Drehung des mit einem Gewinde versehenen Elements.

9. Befestigungsvorrichtung (10) nach Anspruch 7, wobei das Positionierungselement ein längliches Element (112) umfasst, welches eine Vielzahl von Zähnen festlegt, wobei die Befestigungsvorrichtung (10) weiterhin einen Begrenzungsaufbau umfasst, welcher ausgerichtet ist mit der Öffnung (14) in der Abdeckplatte, wodurch komplementäre Zähne festgelegt werden, die in das längliche Element eingreifen können, um so eine Bewegung der Verankerungsvorrichtung (16) relativ zur Abdeckplatte (12) zu erlauben, während eine Bewegung in die entgegengesetzte Richtung verhindert wird.

10. Befestigungsvorrichtung (10) nach Anspruch 7, wobei das Positionierungselement ein längliches Element umfasst, welches eine Vielzahl von Zähnen festlegt, und wobei die Abdeckplatte (12) komplementäre Zähne festlegt, die ausgerichtet sind mit der Öffnung (14) in der Abdeckplatte, und welche in das längliche Element eingreifen können, um so eine Bewegung der Verankerungsvorrichtung (16) hin zur Abdeckplatte zu ermöglichen, während eine Bewegung in die entgegengesetzte Richtung verhindert wird.

11. Befestigungsvorrichtung (10) nach Anspruch 1 oder 2, welche weiterhin einen rohrförmigen Körper (411, 611) umfasst, der an der Abdeckplatte (412) befestigt ist, wobei der rohrförmige Körper dimensioniert ist zur Einführung in die Öffnung in das erste strukturelle Elemente und eine Endwand aufweist, die eine Öffnung festlegt, die dimensioniert ist zur Aufnahme des einzuführenden Positionierungselements.

12. Befestigungsvorrichtung (10) nach Anspruch 1 oder 2, welche weiterhin einen rohrförmigen Körper (411) umfasst, der an der Abdeckplatte (12) befestigt ist, wobei der rohrförmige Körper zumindest eine Seitenwand aufweist, die eine Vielzahl von Schlitzen festlegt, deren Anzahl gleich ist zur Anzahl der radial äquidistanten Kontaktbereiche, die durch den vorspringenden Bereich festgelegt sind.

13. Befestigungsvorrichtung (10) nach Anspruch 1 oder 2, welche weiterhin Nockenmittel aufweist, die in Eingriff gebracht werden können mit dem vorspringenden Bereich, um dafür zu sorgen, dass der vorspringende Bereich in die auseinanderstrebende Stellung gespreizt wird beim Einwirken auf das Positionierungselement.

14. Befestigungsvorrichtung (10) nach Anspruch 1 oder 2, wobei die Abdeckplatte (12) zumindest eine mit einem Gewinde versehene Öffnung festlegt, die so dimensioniert und angeordnet ist, dass sie ein mit einem entsprechenden Gewinde versehenes Befestigungselement aufnehmen kann, welches durch eine Öffnung im zweiten strukturellen Element hindurchtritt.

## Revendications

1. Ensemble de fixation (10) destiné à raccorder des premier et second éléments structurels qui doivent être raccordés, comportant :
un ensemble d'ancrage (16) pouvant être inséré à travers une ouverture (29) définie dans le premier élément structurel, ledit ensemble d'ancrage présentant
une partie de base (18),
une partie en projection (20) s'étendant en direction axiale à partir de ladite partie de base (18), ladite partie en projection (20) comportant au moins trois éléments à la manière d'ailettes (32) allongés pressés vers l'extérieur pouvant être manipulés entre une position pliée facilitant l'insertion à travers l'ouverture (29) dans le premier élément structurel (28) et une position divergente empêchant le retrait de l'élément d'ancrage à travers l'ouverture, **caractérisé en ce qu'**il comporte :
une plaque de face (12) présentant une surface avant (24a) et une surface arrière (24b) et définissant une ouverture (14) qui peut être alignée sur l'ouverture (29) dans le premier élément ; et
un élément de positionnement (22) pour déplacer la partie de base (18) et la partie en projection en une direction axiale vers la plaque de face (12), ledit élément de positionnement s'étendant à partir de ladite partie de base (18) et étant axialement aligné sur l'ouverture (14) de la plaque de face,
dans lequel ladite partie en projection (20) est dimensionnée et disposée pour exercer, lorsqu'elle se trouve dans ladite position divergente et après que ledit élément de positionnement a été actionné, des forces de raccordement sur une surface intérieure du premier élément structurel (28) en trois ou plus de régions radialement équidistantes, isolées de la périphérie de l'ouverture sans exercer de forces significatives sur la surface intérieure du premier élément structurel à un point quelconque entre le bord de l'ouverture et lesdites régions radialement équidistantes,
dans lequel la partie en projection de l'ensemble d'ancrage (16) est suffisamment rigide pour restreindre un mouvement ultérieur de la partie de base (18) vers la plaque de face (12) lorsque la partie en projection entre en contact initial avec le premier élément structurel malgré que l'élément de positionnement continue d'être actionné,
dans lequel la partie en projection est suffisamment rigide pour empêcher le déplacement de régions distales de l'ensemble d'ancrage (16) des positions initiales de contact avec le premier élément structurel malgré l'exercice progressif d'une force de traction sur l'ensemble d'ancrage (16) par l'élément de positionnement.

2. Ensemble de fixation (10) selon la revendication 1, dans lequel lesdits éléments à la manière d'ailettes (32) peuvent être déplacés vers l'extérieur.

3. Ensemble de fixation (10) selon l'une quelconque des revendications 1 ou 2, comprenant par ailleurs un élément d'espacement (30, 411, 611) fixé à ladite plaque de face et pouvant être inséré dans l'ouverture pour restreindre de la sorte le mouvement de ladite plaque de face (12, 112, 412, 612) par rapport à l'ouverture.

4. Ensemble de fixation (10) selon la revendication 3, dans lequel la partie en projection dudit ensemble d'ancrage (16) est pressée vers l'extérieur vers ladite position divergente et dans lequel ledit élément d'espacement (30) est par ailleurs dimensionné et disposé pour retenir ladite partie en projection dans la position pliée pendant l'insertion de l'ensemble d'ancrage (16) à travers l'ouverture.

5. Ensemble de fixation (10) selon l'une quelconque des revendications 1 ou 2, dans lequel chacun des éléments à la manière d'ailettes (32) s'étend à partir de ladite partie de base (18) et présente une partie de pointe définissant lesdites régions radialement équidistantes de contact avec le premier élément structurel.

6. Ensemble de fixation (10) selon l'une quelconque des revendications 1 ou 2, dans lequel les éléments allongés (221) sont interconnectés par des pièces de rigidification latérales (222), chaque élément allongé s'étendant à partir de ladite partie de base (218) et présentant une partie de pointe définissant lesdites régions radialement équidistantes de contact avec le premier élément structurel.

7. Ensemble de fixation (10) selon l'une quelconque des revendications 1 ou 2, dans lequel ledit élément de positionnement est dimensionné et disposé pour s'étendre à partir de ladite partie de base (18) et à travers ladite ouverture et ladite plaque de face (12) à ouverture.

8. Ensemble de fixation (10) selon la revendication 7, dans lequel ladite partie de base (18) définit une ouverture filetée centrale (14) et dans lequel ledit élément de positionnement comprend un élément fileté par quoi le mouvement axial de l'ensemble d'ancrage (16) par rapport à la plaque de face (12) est réalisé par rotation de l'élément fileté.

9. Ensemble de fixation (10) selon la revendication 7, dans lequel ledit élément de positionnement comprend un élément allongé (112) définissant une pluralité de dents, ledit ensemble de fixation (10) comprenant par ailleurs une structure de rétention, alignée sur ladite ouverture (14) dans la plaque de face, définissant des dents complémentaires pouvant entrer en prise avec ledit élément allongé de sorte à permettre le mouvement de l'ensemble d'ancrage (16) vers la plaque de face (12) tout en empêchant un mouvement en direction opposée.

10. Ensemble de fixation (10) selon la revendication 7, dans lequel ledit élément de positionnement comporte un élément allongé définissant une pluralité de dents, et dans lequel ladite plaque de face (12) définit des dents complémentaires, alignées sur ladite ouverture (14) dans la plaque de face pouvant entrer en prise avec ledit élément allongé de sorte à permettre un mouvement de l'ensemble d'ancrage (16) vers la plaque de face (12) tout en empêchant un mouvement en direction opposée.

11. Ensemble de fixation (10) selon l'une quelconque des revendications 1 ou 2, comprenant par ailleurs un corps tubulaire (411, 611) fixé à ladite plaque de face (412), ledit corps tubulaire étant dimensionné pour être inséré dans l'ouverture dans ledit premier élément structurel et présentant une paroi d'extrémité définissant une ouverture dimensionnée pour permettre l'insertion dudit élément de positionnement.

12. Ensemble de fixation (10) selon l'une quelconque des revendications 1 ou 2, comprenant par ailleurs un corps tubulaire (411) fixé à ladite plaque de face (12), ledit corps tubulaire présentant au moins une paroi latérale définissant une pluralité de fentes en nombre égal au nombre de régions radialement équidistantes de contact définies par la partie en projection.

13. Ensemble de fixation (10) selon l'une quelconque des revendications 1 ou 2, comportant par ailleurs des moyens de came pouvant entrer en prise avec ladite partie en projection pour amener ladite partie en projection à se détendre dans ladite position divergente après activation dudit élément de positionnement.

14. Ensemble de fixation (10) selon l'une quelconque des revendications 1 ou 2,
dans lequel la plaque de face (12) définit au moins une ouverture filetée, dimensionnée et disposée pour recevoir une fixation filetée correspondante passant à travers une ouverture dans le second élément structurel.
